# EUROPÄISCHE PATENTANMELDUNG

(11) **EP 0 775 659 A2**
(43) Veröffentlichungstag der Anmeldung: **28.05.1997**
(21) Anmeldenummer: 97101416.2
(22) Anmeldetag: 12.06.1993
(51) Int. Cl.: B65H 19/12, B65G 61/00, B25J 13/08, B25J 15/00, B65H 16/04

(54) **Vorrichtung zum Handhaben von Bobinen aus Materialbahnen**

(30) Priorität: 30.06.1992 DE 4221052
(62) Teilanmeldung aus: 93109423.9
(71) Anmelder: Focke & Co. (GmbH & Co.), D-27283 Verden (DE)
(72) Erfinder: Focke, Heinz, 27283 Verden (DE); Gosebruch, Harald Dr., 27283 Verden (DE)
(74) Vertreter: Bolte, Erich, Dipl.-Ing.

(57) **Zusammenfassung**

2.1. Für die Handhabung von Bobinen (10) aus einer gewickelten Materialbahn, insbesondere aus Verpackungsmaterial, dient ein Bobinenförderer mit einem exakt positionierbaren Tragzapfen (41). Dieser tritt in eine Mittenöffnung der Bobine (10) ein.
2.2. Der Tragzapfen (41) weist an seinem freien Ende optoelektrische Sensoren oder Tastorgane (82) zum selbsttätigen Ausrichten des Tragzapfens auf eine Bobine auf.

## Beschreibung

Die Erfindung betrifft eine Vorrichtung zum Handhaben von Bobinen aus Materialbahnen, insbesondere aus Verpackungsmaterial, wobei die Bobinen durch Bobinenförderer mit einem jeweils eine Bobine erfassenden Bobinenhalter aufnehmbar, transportierbar und an einer Verarbeitungsmaschine absetzbar sind und wobei zum Erfassen der Bobinen ein Tragzapfen des Bobinenhalters in eine Mittenöffnung der Bobine einführbar ist.

Der Erfindung liegt die Aufgabe zugrunde, Maßnahmen für eine einfache, vollautomatische und leistungsfähige Handhabung von gewickeltem Verpackungsmaterial (Bobinen) im Zusammenhang mit Verpackungsmaschinen vorzuschlagen.

Zur Lösung dieser Aufgabe ist die erfindungsgemäße Vorrichtung dadurch gekennzeichnet, daß am freien Ende des Tragzapfens optoelektrische Sensoren oder Tastorgane zum selbsttätigen Ausrichten des Tragzapfens auf die Bobine bzw. deren Mittenöffnung und/oder zum Identifizieren der Bobine angeordnet sind.

Die Bobinentragorgane, nämlich Tragzapfen sind somit mit optoelektrischen Tastorganen ausgerüstet, die ein selbsttätiges exaktes Positionieren von Tragzapfen zu Tragzapfen oder von Tragzapfen in bezug auf die Mittenöffnung von Bobinen steuern. Bei diesen Tastorganen handelt es sich insbesondere um eine am freien Ende eines Tragzapfens angeordnete Kamera, die auf Gegenorgane anspricht. Bei der Aufnahme von Bobinen, beispielsweise von einer Palette, bewirkt die Kamera das exakte Einführen des Tragzapfens in die Mittenöffnung der Bobine. Diese kann mit durch die Kamera identifizierbaren Markierungen versehen sein, um die Art der Bobine bzw. des Verpackungsmaterials zu erkennen. Als vorteilhaftes Beispiel können die Kerne bzw. Hülsen der Bobinen für unterschiedliche Verpackungsmaterialien unterschiedlich gefärbt sein.

Der Bobinenhalter wird getragen durch drei mit vorzugsweise etwa gleichen Winkelabständen voneinander angeordnete längenveränderliche Stellorgane bzw. Druckmittelzylinder, die zur Einstellung der erwünschten Position individuell und unabhängig voneinander verstellbar sind.

Ein weiteres Thema der Erfindung ist in der Anordnung eines Bobinentragorgans, nämlich eines Arbeitszapfens als Aufnahmeorgan für Bobinen an der Verarbeitungs-, insbesondere Verpackungsmaschine zu sehen. Der Arbeitszapfen der in die Mittenöffnung der Bobine eintritt, ist erfindungsgemäß schwenkbar gelagert zwischen einer aufrechten Position zur Übernahme der Bobine und einer horizontalen Arbeitsstellung. In der letztgenannten Position wird die Materialbahn von der Bobine abgezogen. Darüber hinaus ist erfindungsgemäß eine dritte (horizontale) Stellung gegeben, in der ein Kern bzw. eine Hülse der leergefahrenen Bobine von dem Arbeitszapfen abgeschoben werden kann.

Die Hülse der leergefahrenen Bobine wird selbsttätig von einem Hülsenhalter aufgenommen, der die Hülse für den Abtransport bereithält, vorzugsweise durch den Bobinenförderer für den Transport der Bobinen.

Weitere Einzelheiten der Erfindung werden nachfolgend anhand eines in den Zeichnungen dargestellten Ausführungsbeispiels näher erläutert. Es zeigt:
- Fig. 1: Eine Ablage mit mehreren Verarbeitungsmaschinen für Verpackungsmaterial und einem Fördersystem für dieses in schematisiertem Grundriß,

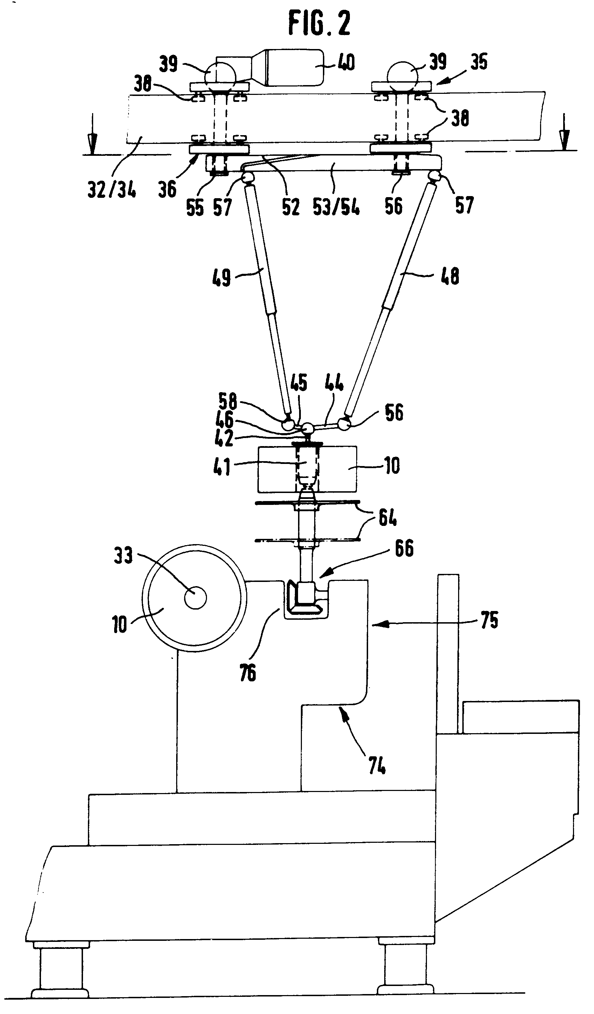

- Fig. 2: einen Bobinenförderer im Bereich einer Verpackungsmaschine in Seitenansicht,
- Fig. 3: eine Einzelheit des Bobinenförderers in einer gegenüber Fig. 2 um 90° versetzten Schnitt- bzw. Ansichtsebene im Bereich der Aufnahme einer Bobine,

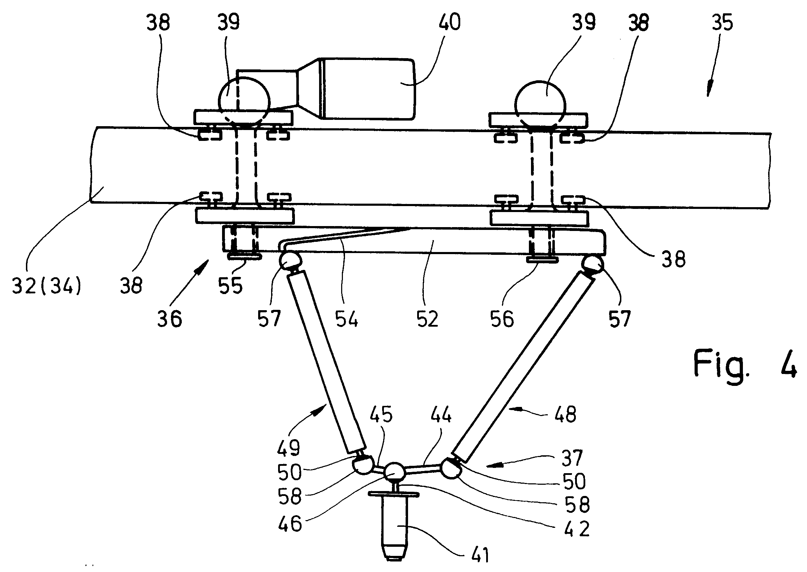

- Fig. 4: einen Bobinenförderer als Einzelheit in Seitenansicht,
- Fig. 5: einen Horizontalschnitt einer Einzelheit des Bobinenförderers in der Schnittebene V - V der Fig. 2,
- Fig. 6: eine Einzelheit des Bobinenförderers im Vertikalschnitt, in vergrößertem Maßstab,
- Fig. 7: die Lagerung eines Arbeitszapfens einer Verpakkungsmaschine in Seitenansicht bzw. im Vertikalschnitt,
- Fig. 8: die Einzelheit gemäß Fig. 7 im Horizontalschnitt bei veränderter Relativstellung,
- Fig. 9: ein Tragzapfen als Einzelheit mit einem Teil eines Arbeitszapfens in vergrößertem Maßstab, teilweise geschnitten,

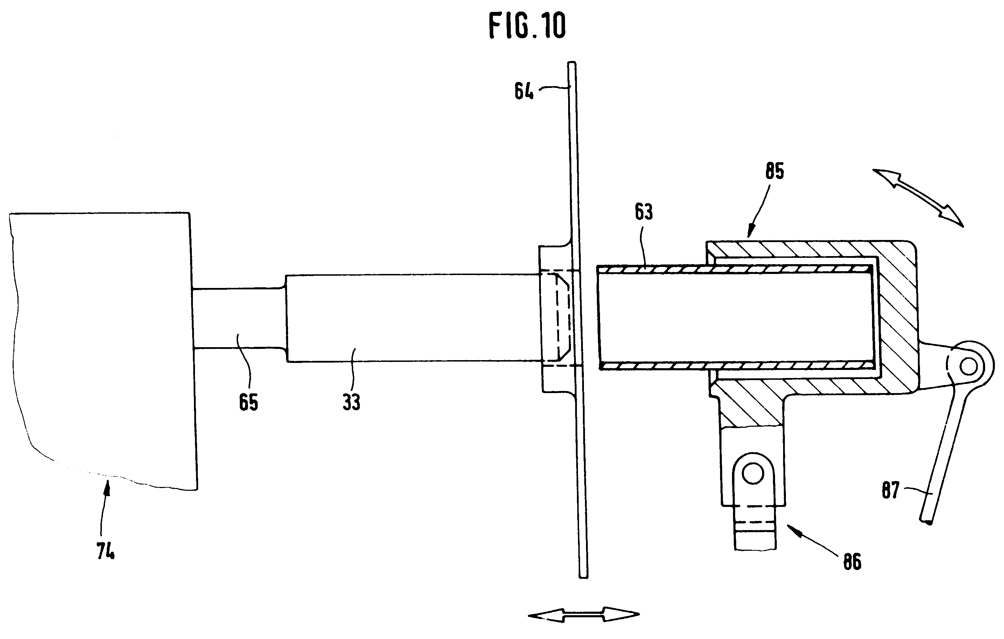

- Fig. 10: einen Hülsenhalter für eine Hülse einer leergefahrenen Bobine in Aufnahmeposition in Seitenansicht,

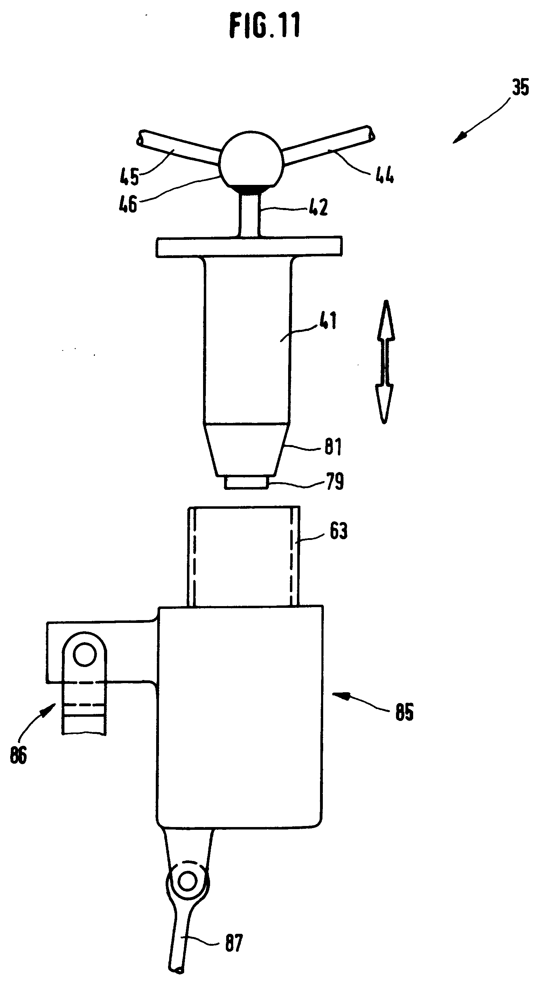

- Fig. 11: den Hülsenhalter gemäß Fig. 10 in Bereitstellungsposition, ebenfalls in Seitenansicht.

Bei dem gezeigten Ausführungsbeispiel geht es um die Handhabung von Bobinen 10 aus gewickeltem, bahnförmigem Material. Dabei handelt es sich in erster Linie um Verpackungsmaterial . Betroffen sind aber auch andere Materialien, z.B. Zigarettenpapier und Belagpapier für Zigarettenfilter. Die als gewickelte Bahn vorliegenden Bobinen 10 sind üblicherweise mit einer Mittenöffnung 11 versehen. In dieser befindet sich eine Hülse, auf die die Materialbahn gewickelt ist.

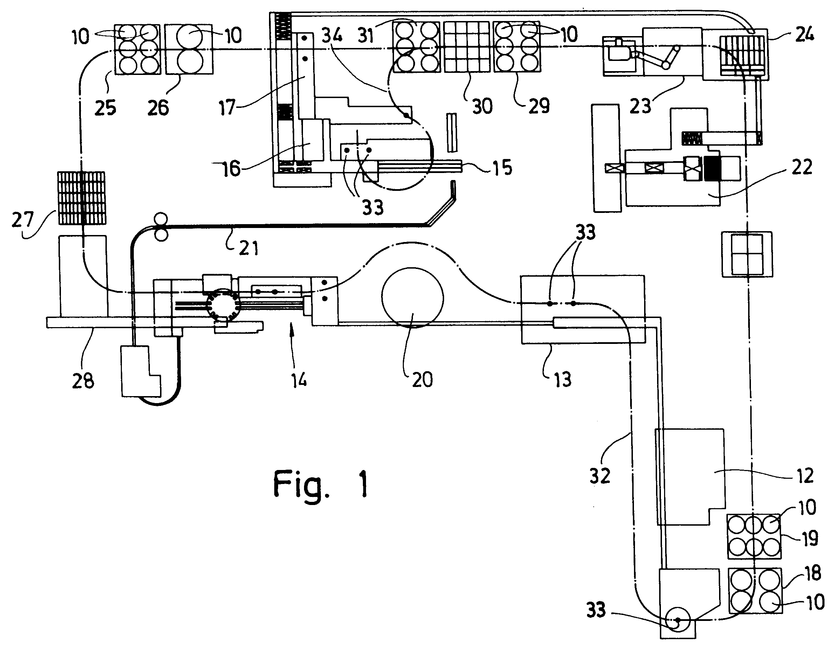

Fig. 1 zeigt im vereinfachten Grundriß eine Komplettanlage für die Herstellung und Verpackung von Zigaretten. Zu dieser Anlage gehört eine Zigaretten-Herstellmaschine 12, eine Filteransetzmaschine 13, eine Verpackungsmaschine 14, eine Folieneinschlagmaschine 15, ein Stangenpacker 16 und eine Stangenumhüllungsmaschine 17.

Die Zigaretten werden im Bereich der Zigaretten-Herstellmaschine 12 gefertigt. Dieser Maschine ist ein Zigarettenpapier-Speicher 18 zugeordnet. Des weiteren befindet sich in diesem Bereich ein Belagpapier-Speicher 19. Das Belagpapier wird im Bereich der Filteransetzmaschine 13 eingesetzt. Die hier fertiggestellten Zigaretten gelangen in einen Zigaretten-Speicher 20.

Aus dem Zigaretten-Speicher 20 werden die Zigaretten der (Zigaretten-)Verpackungsmaschine 14 zugeführt. Hier werden die Zigarettenpackungen hergestellt und über einen Packungsförderer 21 weiteren Verpackungsmaschinen zugeführt. Hierzu gehört die Folieneinschlagmaschine 15, die die äußere Umhüllung der Zigarettenpackung aus Folie anbringt. Der nachfolgende Stangenpacker 16 dient zur Herstellung von Packungsgebinden (Zigarettenstangen). Es folgt schließlich eine Stangenumhüllungsmaschine 17 zum Anbringen einer äußeren Umhüllung der Zigarettenstangen.

Die insoweit vertriebsfertige Zigaretten-Großpackung wird einem Kartonierer 22 zugeführt, in dessen Bereich die Gebindepackungen in Kartons eingefüllt werden. Anschließend folgt ein Palettierer 23 zum Beladen von Paletten 24 mit den Kartons.

Für die Verpackungsmaschine 14 wird bei der Herstellung von Zigarettenpackungen des Typs Klappschachtel (Hinge-Lid-Packung) unterschiedliches Verpackungsmaterial eingesetzt. Ein Stanniol-Speicher 25 und ein Kragen-Speicher 26 sind in einem größerem Abstand von der Verpackungsmaschine 14 angeordnet, jedoch in einem für die Raumausnutzung günstigen Bereich. Der Stanniol-Speicher 25 enthält bahnförmiges Verpackungsmaterial (Stanniol) als Innenumhüllung für den Packungsinhalt. Auch das Material zur Herstellung eines Kragens (dünner Karton) ist hier als Bobine 10 bereitgehalten im Kragen-Speicher 26. Ein Zuschnitt-Speicher 27 enthält anderweitig vorbereitete, nämlich gestanzte Zuschnitte für den genannten Packungstyp. Die Zuschnitte bzw. Zuschnittstapel werden auf einem gesonderten Zuschnittförderer 28 der Verpackungsmaschine 14 zugeführt.

Für die aus einer dünnen Kunststoffolie bestehende Außenumhüllung der einzelnen Packungen wird das Verpackungsmaterial im Bereich eines Folien-Speichers 29 bereitgehalten. Auch dieses Verpackungsmaterial liegt in Gestalt von Bobinen 10 vor. Für die Gebindeumhüllung dienen vorgefertigte Zuschnitte aus dünnem Karton im Bereich eines Stangen-Speichers 30. Schließlich ist ein weiterer Speicher, nämlich ein Außenfolien-Speicher 31 für das äußere Umhüllungsmaterial der Zigarettenstangen vorgesehen. Auch dieses Verpackungsmaterial liegt als Bobine 10 vor.

Zum Transport der Bobinen 10 von den geschilderten Bobinen-Speichern zu den Verarbeitungsmaschinen dient bei dem gezeigten Ausführungsbeispiel ein geschlossenes Transportsystem. Es handelt sich dabei um einen "Überkopfförderer" mit einer Förderbahn bzw. einer Förderschiene 32 oberhalb der Speicher und Maschinen. Die Förderschiene 32 ist hier als geschlossene Bahn so angeordnet, daß sie alle Speicher mit Verpackungsmaterial überfährt. Es kann also von jedem Speicher Verpackungsmaterial aufgenommen werden. Des weiteren ist jede der Verarbeitungsmaschinen so erfaßt, daß mindestens ein Arbeitszapfen 33, bei einzelnen Maschinen auch zwei Arbeitszapfen, beschickt werden können. Die Aufnahmen für das Verpackungsmaterial des Stangenpackers 16 und der Folieneinschlagmaschine 15 werden über eine bogen- bzw. S-förmige Abzweigung 34 der Förderschiene 32 erreicht. Die Abzweigung 34 überfährt als erstes eine Aufnahmevorrichtung für Stangenzuschnitte aus dem Stangen-Speicher 30. Danach führt die Abzweigung 34 zu den beiden Arbeitszapfen 33 der Folieneinschlagmaschine 15, um Bobinen aus dem Folien-Speicher 29 anzuliefern.

Der Transport der einzelnen Bobinen 10 erfolgt durch einen Bobinenförderer 35. Dieser besteht aus einem an der Förderschiene 32 bzw. der Abzweigung 34 verfahrbaren Fahrgestell 36 und einem Bobinenhalter 37. Letzterer dient zum Erfassen und Halten jeweils einer Bobine 10. Der Bobinenenförderer 35 ist mit um horizontale oder vertikale Achsen drehbaren Rollen 38, 39 an der Förderschiene 32 verfahrbar. Ein jedem Bobinenförderer 35 zugeordneter Motor 40 dient zum Antrieb.

An der Unterseite des Fahrgestells 36 ist der Bobinenhalter 37 höhenverstellbar und kippbar angebracht. Als Tragorgan zur Aufnahme der Bobine 10 dient ein Tragzapfen 41, der in die Mittenöffnung der Bobine 10 eingeführt wird. Der Bobinenhalter 37 ist mit dem Tragzapfen 41 auf- und abbewegbar sowie in queraxialer Richtung (bezogen auf den Tragzapfen 41) verstellbar. Der Tragzapfen 41 bleibt bei dieser Ausführungsform stets in vertikaler Stellung.

Der Tragzapfen 41 ist als Teil des Bobinenhalters 37 über ein Verbindungsstück 42 (kurze Stange) mit einem Haltegestell verbunden. Dieses besteht hier aus drei sternförmig unter gleichen Winkelabständen zueinander gerichteten Tragarmen 43, 44, 45. Diese sind in einem mittleren Knotenpunkt starr miteinander verbunden. Hier schließt unten das Verbindungsstück 42 an, und zwar über ein Kugelgelenk 46, dessen oberer, fester Teil mit dem Knotenpunkt der Tragarme 43, 44, 45 verbunden ist. Durch das Kugelgelenk 46 wird der Tragzapfen 41 stets selbsttätig, nämlich infolge des Eigengewichts, in der vertikalen Postion gehalten und mit dem Bobinenhalter auf- und abbewegt sowie queraxial verschoben.

Die Tragarme 43..45 werden von längenveränderlichen Tragelementen gehalten. Bei diesen handelt es sich um Druckmittelzylinder 47, 48, 49, und zwar in der Ausführung als langgestreckte, doppeltwirkende pneumatische Teleskopzylinder. Die Druckmittelzylinder 47..49 können dadurch einen langen Hubweg auf den Tragzapfen 41 übertragen.

Die ebenfalls sternförmig, nämlich in der Ebene der Tragarme 43..45, gerichteten Druckmittelzylinder 47..49 sind mit den oberen Enden mit dem Fahrgestell 36 des Bobinenförderers 35 verbunden. Das Fahrgestell 36 besteht zu diesem Zweck aus einer Traverse 52, die sich in Längs- bzw. Fahrtrichtung erstreckt und aus seitwärts gerichteten Auslegerarmen 53 und 54. Letztere sind unter einem Winkel zur Traverse 52 gerichtet. Es entsteht dadurch ein ebenfalls sternförmiges Tragwerk in den Ebenen der Tragarme 43..45. Mit Endbereichen ist die Traverse 52 über Tragbolzen 55, 56 mit einem Gestell der Rollen 38, 39 verbunden.

Jeder Druckmittelzylinder 47, 48, 49 ist individuell betätigbar, also ein- oder ausfahrbar. Dadurch ergeben sich unterschiedliche und an die jeweiligen Verhältnisse angepaßte Relativstellungen des Bobinenhalters 37 und damit des Tragzapfens 41. Um diese Stellungen zu ermöglichen, sind die Druckmittelzylinder 47..49 mit den oberen Enden über Kugelgelenke 57 mit dem Fahrgestell 36 und über weitere Kugelgelenke 58 mit den Tragarmen 43..45 verbunden. Die oberen Kugelgelenke 57 sitzen einerseits an einem Ende der Traverse 52 und zum anderen an den Enden der Auslegerarme 53, 54.

Zur Aufnahme einer Bobine 10 von einem der Speicher 18, 19; 25, 26; 29, 31 wird ein Bobinenförderer 35 über den jeweiligen Speicher gefahren. In dessen Bereich sind die Bobinen 10 mit aufrechter Mittenöffnung 11 gelagert. Der Tragzapfen 41 kann bei im wesentlichen aufrechter Positionierung von oben in die Mittenöffnung 11 einfahren. Um ungenaue Positionierungen der Bobinen auszugleichen, ist der Außendurchmesser des Tragzapfens 41 deutlich kleiner als der Durchmesser der Mittenöffnung 11 bzw. einer Hülse 77 der Bobine 10. Durch dieses beträchtliche Spiel können Ungenauigkeiten der Relativpositionen beim Einfädeln des Tragzapfens 41 ausgeglichen werden.

Der Tragzapfen 41 ist (in bekannter Weise) so ausgebildet, daß innerhalb der Mittenöffnung 11 Spannorgane 78 wirksam werden, die eine ausreichende Sicherung der Bobine 10 auf dem Tragzapfen 41 auch bei aufrechter Stellung gewährleisten. Die Spannorgane 78 sind in Radialrichtung bewegbar und beispielsweise hydraulisch, pneumatisch oder mechanisch betätigbar.

Die Bobine 10 kann bei in der Mittenöffnung 11 sitzendem Tragzapfen 41 vom Speicher abgehoben werden, und zwar durch entsprechendes Einfahren der Druckmittelzylinder 47..49. Im Bereich einer der beschriebenen Arbeitsmaschinen wird der Bobinenhalter 37 wieder abgesenkt. Bei dem vorliegenden Ausführungsbeispiel wird die Bobine 10 unmittelbar an einen Arbeitszapfen 33 der Verpackungsmaschine oder dergleichen übergeben. Der Arbeitszapfen 33 kann sich dabei in einer aufrechten Stellung befinden. Es ist aber auch möglich, bei entsprechender Position des Tragzapfens 41 die Bobine 10 auf einen horizontal gerichteten Arbeitszapfen 33 zu übergeben.

Durch die Organe (Druckmittelzylinder 47..49) zum Verstellen des Tragzapfens 41 ist eine uneingeschränkt selbsttätige Aufnahme und weitere Handhabung der Bobinen 10 möglich. Durch Tastorgane, insbesondere durch optoelektrische Sensoren oder Kameras wird der Tragzapfen 41 durch gezielte Verstellung der Druckmittelzylinder 47..49 selbsttätig auf die Mittenöffnung 11 ausgerichtet und sodann in diese eingefahren.

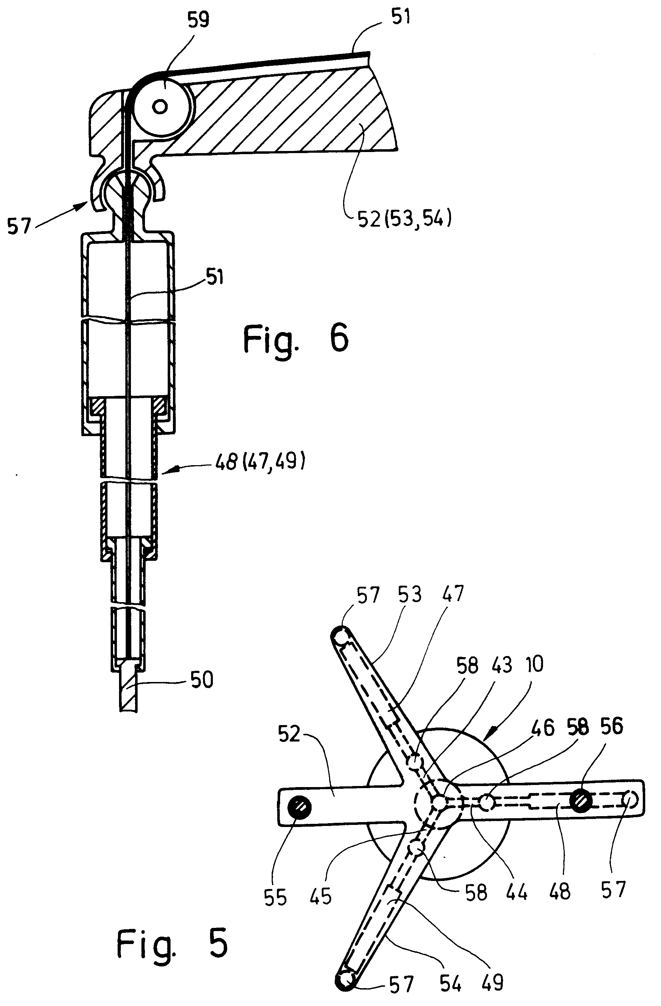

Für die im einzelnen nicht dargestellte Steuerung muß die Relativstellung der einzelnen Druckmittelzylinder 47..49 ständig exakt festgestellt und bei der Steuerung der Bewegungen berücksichtigt werden. Es geht dabei um die Ausfahrlänge der Druckmittelzylinder 47..49. Diese kann durch Meßorgane innerhalb der Druckmittelzylinder 47..49 auf der Basis von Ultraschall festgestellt werden, wobei eine untere, aus- und einfahrbare Kolbenstange 50 des Druckmittelzylinders 47..49 als Reflektionsfläche dient. In Fig. 6 ist eine Alternative dargestellt. Diese besteht darin, daß ein unterer, ausfahrbarer Teil des Druckmittelzylinders 47..49, nämlich die Kolbenstange 50, über ein mitbewegbares Meßorgan, im vorliegenden Falle mit einem (dünnen) Seil 51 verbunden ist. Dieses tritt am oberen Ende aus dem Druckmittelzylinder 47..49 aus und führt zu einer Meßeinrichtung. Das Auf- und Abwickeln des Seils 51 beim Aus- und Einfahren des Druckmittelzylinders 47..49 wird gemessen. Hieraus ergeben sich exakte Daten über die Ausfahrposition des jeweiligen Druckmittelzylinders 47..49. Das Seil 51 ist im vorliegenden Falle durch das Kugelgelenk 57 hindurchgeleitet. Es wird am Ende der Traverse 52 bzw. des Auslegearms 53, 54 über eine Umlenkrolle 59 geführt und gelangt dann zu einer nicht gezeigten Meßeinrichtung. Das Seil 51 - oder ein anderes, entsprechendes Zugorgan - kann auch als Organ zum Einfahren des Druckmittelzylinders 47, 48, 49 verwendet werden. In diesem Falle wird der Druckmittelzylinder durch das Druckmittel ausgefahren und durch das Zugorgan (Seil 51) eingezogen.

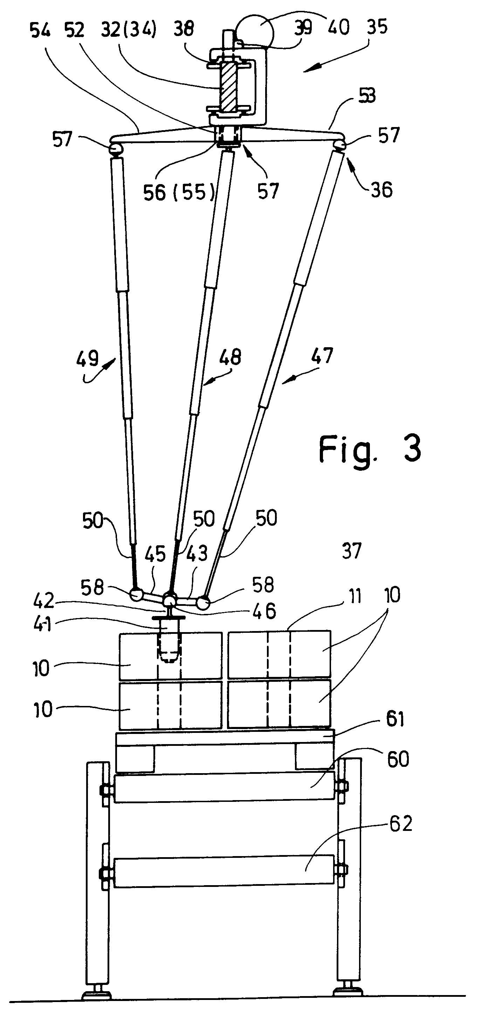

Fig. 3 zeigt eine der möglichen Positionen des Tragzapfens 41, bei der dieser aufgrund entsprechender Positionierung der Bobine 10 zur Mittelebene des Bobinenförderers 35 versetzt ist. Gleichwohl wird der Tragzapfen 41 in einer vertikalen Position in die Mittenöffnung 11 eingeführt. Die Vertikalstellung ergibt sich dabei durch das mittlere Kugelgelenk 46.

Fig. 3 zeigt auch ein Beispiel für die Ausbildung eines Speichers. Dieser besteht aus einem Endlosförderer 60. Mehrere Reihen (hier zwei) von übereinander gestapelten Bobinen 10 sind auf einer Palette 61 gelagert. Von dieser werden die Bobinen 10 nacheinander abgenommen. Durch die Lagerung der Bobinen 10 sind diese versetzt zu der durch den Endlosförderer 60 und den Bobinenförderer 35 gegebenen Mittelebene angeordnet.

Unterhalb des Endlosförderers 60 befindet sich ein Rückförderer 62 für die leeren Paletten 61.

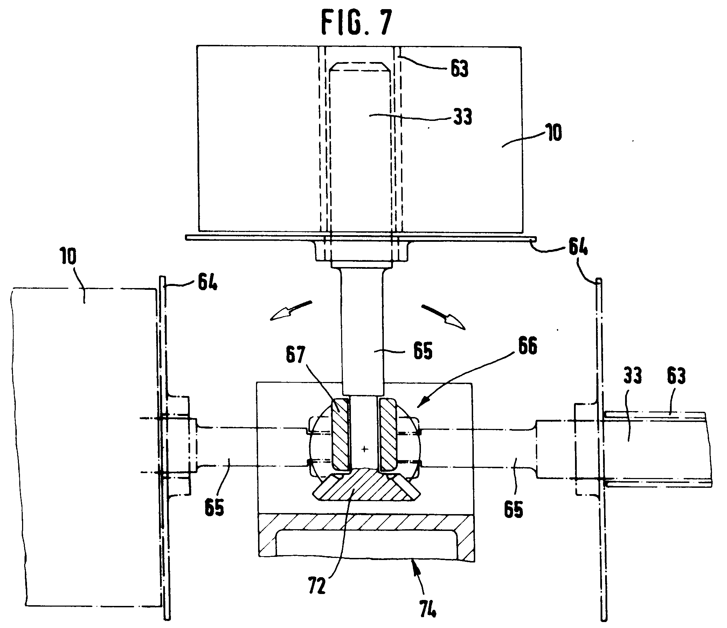

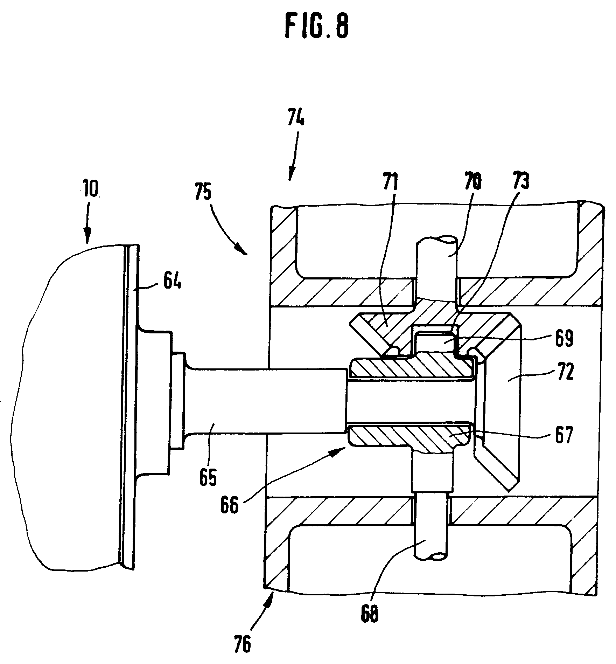

Eine weitere, eigenständige Besonderheit ist beispielshaft in Fig. 7 und Fig. 8 dargestellt. Der an der Verarbeitungsmaschine, insbesondere an einer Verpackungsmaschine, angeordnete Arbeitszapfen 33 ist schwenkbar gelagert. Wie insbesondere aus Fig. 7 ersichtlich, kann der Arbeitszapfen 33 aus einer aufrechten Position in eine horizontale Stellung bewegt werden. Die aufrechte Anordnung dient in erster Linie zur Aufnahme einer neuen, in der beschriebenen Weise angelieferten Bobine 10. Die horizontale Stellung dient als Arbeitsstellung, in der die Materialbahn von der Bobine 10 bzw. dem Arbeitszapfen 33 abgezogen und den Verarbeitungsorganen zugeführt wird.

Das Ausführungsbeispiel gemäß Fig. 7 ermöglicht zwei entgegengesetzt gerichtete horizontale Positionen. Die in Fig. 7 links gezeigte Stellung des Arbeitszapfens 33 ist die Arbeitsstellung. Gegenüberliegend, also rechts, kann eine die Mittenöffnung 11 begrenzende Hülse 63 der leergefahren Bobine 10 von dem Arbeitszapfen 33 abgestreift werden. Danach wird der Arbeitszapfen 33 wieder in die aufrechte Position geschwenkt, um eine neue Bobine 10 aufzunehmen. Der Arbeitszapfen 33 ist mit einer Anlagescheibe 64 (Bordscheibe) versehen, an der die Bobine 10 in der Arbeitsposition anliegt. Die Anlagescheibe 64 ist im vorliegenden Falle in Axialrichtung verschiebbar. Dadurch kann zum einen die Hülse 63 der leergefahrenen Bobine 10 in der beschriebenen Position von dem Arbeitszapfen 33 abgeschoben werden. Durch die in Axialrichtung hin- und herverschiebbare Anlagescheibe 64 ist aber eine weitere Besonderheit möglich. Beim Absetzen einer Bobine 10 auf einem (aufrechten) Arbeitszapfen 33 fährt die Anlagescheibe 64 zum freien (oberen) Ende des Arbeitszapfens 33 und dient so als Auflager für die Bobine 10 bei der Übergabe an den Arbeitszapfen 33. Die Anlagescheibe 64 wird dann in Axialrichtung zurück- bzw. abwärtsbewegt und führt dabei die Bobine in die korrekte Position auf dem Arbeitszapfen 33. Es wird dadurch eine Fallbewegung der Bobine 10 vermieden.

Beim Abschieben der Hülse 63 der leergefahrenen Bobine 10 wird diese in einen becherförmigen Hülsenhalter 85 geschoben. Der Hülsenhalter 85 ist in einem Schwenklager 86 schwenkbar gelagert und kann durch einen Schwenkhebel 87 geschwenkt werden. Zum Abschieben der Hülse 63 einer leergefahrenen Bobine 10 wird der Hülsenhalter 85 zunächst in eine horizontale Position geschwenkt und die Hülse 63 der leergefahrenen Bobine 10 sodann mittels der Anlagescheibe 64 vom Arbeitszapfen 33 abgeschoben und in den Hülsenhalter 85 eingeschoben. Der Hülsenhalter 85 wird dann in eine aufrechte Position geschwenkt. Die Hülse 63 einer leergefahrenen Bobine 10 wird von dem Tragzapfen 41 des Bobinenförderers 35 erfaßt und abgefördert.

Der Arbeitszapfen 33 ist auf der Rückseite der Anlagescheibe 64 mit einer axialen Verlängerung versehen, nämlich einem Schwenkzapfen 65. Dieser sitzt drehbar in einem Kipplager 66. Dieses besteht aus einer Lagerhülse 67, in der der Schwenkzapfen 65 mit einem Endbereich drehbar gelagert ist. An der Außenseite weist die Lagerhülse 67 auf der einen Seite eine Schwenkwelle 68 und auf der gegenüberliegenden Seite einen kurzen Lagerzapfen 69 auf. Über die Schwenkwelle 68, die mit einem im einzelnen nicht dargestellten Antrieb verbunden ist, kann die Kipp- bzw. Schwenkbewegung auf den Schwenkzapfen 65 übertragen werden. Der Lagerzapfen 69 bildet dabei eine Ausgleichsabstützung auf der zur Schwenkwelle 68 gegenüberliegenden Seite.

Das Kipplager 66 ist so ausgebildet, daß unabhängig von der Stellung des Arbeitszapfens 33 ein Drehantrieb auf diesen übertragen werden kann. Hierfür ist ein Winkelgetriebe vorgesehen. Auf der zur Schwenkwelle 68 gegenüberliegenden Seite ist eine Antriebswelle 70 angeordnet, die am Ende ein Kegelrad 71 aufweist. Dieses steht im Eingriff mit einem unter 90° hierzu gerichteten Kegelrad 72 am freien Ende des Schwenkzapfens 65. Der Drehantrieb wird demnach von der Antriebswelle 70 über 90° auf den den Schwenkzapfen 65 und damit auf den Arbeitszapfen 33 übertragen.

Das Kegelrad 71 ist mit einer Ausnehmung 73 versehen, die als Lager für den kurzen Lagerzapfen 69 dient.

Das so ausgebildete Getriebe ist in einem besonderen Maschinengestell 74 der Verpackungs- oder sonstigen Maschine untergebracht. Das Maschinengestell 74 hat eine U-förmige Gestalt mit aufrechten Tragschenkeln 75 und 76. Diese bestehen aus Hohlprofilen. In den einander zugekehrten Profilwänden sind die Schwenkwelle 68 einerseits und die Antriebswelle 70 andererseits gelagert. Das Getriebe ist zwischen den Tragschenkeln 75, 76 untergebracht, wobei sich durch das U-Profil ergebende seitliche Öffnungen die entgegengesetzten horizontalen Positionen des Arbeitszapfens 33 und des Schwenkzapfens 65 ebenso ermöglichen wie die nach oben gerichtete Position.

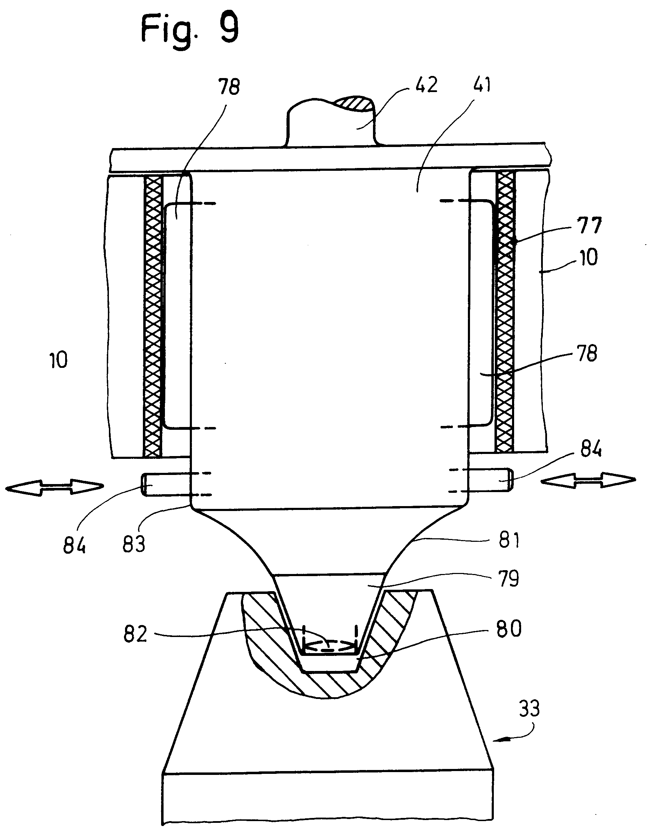

Für die exakte Übergabe der Bobine 10 vom Transportzapfen 41 auf den Arbeitszapfen 33 sind besondere Maßnahmen getroffen (Fig. 9). Diese gehen bei dem dargestellten Ausführungsbeispiel von einer aufrechten Position sowohl des Arbeitszapfens 33 wie auch des Tragzapfens 41 aus. Dieser ist am freien bzw. unteren Ende so ausgebildet, daß eine selbstjustierende bzw. zentrierende, formschlüssige Verbindung mit dem Arbeitszapfen 33 zur Übergabe der Bobine 10 erfolgen kann. Bei dem gezeigten Ausführungsbeispiel ist das freie Ende des Transportszapfens 41 mit einem Zentrierkegel 79 versehen. Dieser ist ein Kegelstumpf, der in eine entsprechend ausgebildete, kegelstumpfförmige Vertiefung 80 am freien Ende des Arbeitszapfens 33 passend eintritt. Die Vertiefung 80 ist mittig und in Axialrichtung verlaufend angeordnet. Der Zentrierkegel 79 hat deutlich kleinere Abmessungen als der Tragzapfen 41. Ein bogenförmig ausgebildetes Übergangsstück 81 ist zwischen dem Zentrierkegel 79 und dem eigentlichen, tragenden Teil des Tragzapfens 41 angeordnet.

Am unteren bzw. freien Ende des Tragzapfens 41 ist ein optoelektrisches Tastorgan 82 angeordnet. Bei dem vorliegenden Ausführungsbeispiel befindet sich das Tastorgan 82 im Bereich des Zentrierkegels 79. Das Tastorgan 82 bewirkt selbsttätig die exakte Positionierung des Tragzapfens. Im Bereich des Arbeitszapfens 33 kann ein korrespondierendes Tastorgan (Sender und Empfänger) angeordnet sein.

Ist das Tastorgan 82 als Kamera ausgebildet, kann mit deren Hilfe das selbsttätige Auffinden von Bobinen 10 im Bereich eines Vorrats, zum Beispiel auf einer Palette, gesteuert werden. Das Tastorgan 82 (Kamera) zentriert den Tragzapfen 41 auf die Mittenöffnung einer Bobine. Dabei kann die Kamera auch zur Identifizierung der Bobinen eingesetzt werden, wenn diese bei unterschiedlichen Verpackungsmaterialien von der Kamera aufzunehmende Merkmale aufweist. Als Beispiel kann die Hülse 77 eine besondere Farbe aufweisen, die einem bestimmten Verpackungsmaterial zugeordnet ist. Das Tastorgan 82 (Kamera) spricht auf Farben an und sucht selbsttätig die abgerufene Bobine 10 auf der Palette oder dergleichen.

Der Tragzapfen 41 ist weiterhin mit Organen zur Sicherung der Bobine 10 in der Transportposition versehen. Der Tragzapfen 41 ist zu diesem Zweck in Axialrichtung länger als die Abmessung der Bobine 10 in Axialrichtung. Ein Endstück 83 des Arbeitszapfens 41 ragt aus der Bobine 10 bzw. der Hülse 77 heraus. In diesem Bereich sind Sicherungsorgane angebracht, bei dem gezeigten Ausführungsbeispiel in Radialrichtung bewegbare Sicherungsstifte 84. Diese können zurückgezogen werden bis sie vollständig innerhalb des Profils des Tragzapfens 41 liegen. In der ausgefahrenen Stellung (Fig. 9) ragen sie bis in den Bereich der Bobine 10 bzw. der Hülse 77, so daß diese bei einem Versagen der Spannorgane 78 von den Sicherungsstiften 84 gehalten wird. Es können mehrere, z.B. drei oder vier derartiger Sicherungsstifte 84 längs des Umfangs des Tragzapfens 41 verteilt angeordnet sein.

Die Betätigung von Organen, die ganz oder teilweise innerhalb des (Trag-)Zapfens 41 angeordnet sind, erfolgt zweckmäßigerweise durch Druckmittel über entsprechende Zylinder bzw. zylinderartig ausgebildete Stellorgane. Ein geeignetes Beispiel ist in DE-A-40 24 284 in Fig. 6 und Fig. 7 dargestellt. Es werden dort Lösungen aufgezeigt für die Verstellbarkeit der Anlagescheibe 64 sowie der Spannorgane 78.

## Patentansprüche

1. Vorrichtung zum Handhaben von Bobinen (10) aus Materialbahnen, insbesondere aus Verpackungsmaterial, wobei die Bobinen (10) durch Bobinenförderer (35) mit einem jeweils eine Bobine (10) erfassenden Bobinenhalter (37) aufnehmbar, transportierbar und an einer Verarbeitungsmaschine absetzbar sind und wobei zum Erfassen der Bobinen (10) ein Tragzapfen (41) des Bobinenhalters (37) in eine Mittenöffnung (11) der Bobine (10) einführbar ist, **dadurch gekennzeichnet,** daß am freien Ende des Tragzapfens (41) optoelektrische Sensoren oder Tastorgane (82) zum selbsttätigen Ausrichten des Tragzapfens (41) auf eine Bobine (10) bzw. deren Mittenöffnung (11) und/oder zum Identifizieren einer Bobine (10) angeordnet sind.

2. Vorrichtung nach Anspruch 1, dadurch gekennzeichnet, daß das am freien Ende des Tragzapfens (41) angeordnete Tastorgan (82) eine Kamera ist.

3. Vorrichtung nach Anspruch 1 oder 2, dadurch gekennzeichnet, daß das Tastorgan (82) für Markierungen auf den Bobinen, insbesondere für farbige Markierungen auf Bobinenhülsen (77) sensibel ist.

4. Vorrichtung nach einem der Ansprüche 1 bis 3, dadurch gekennzeichnet, daß der Tragzapfen (41) durch das Tastorgan (82) bei Übergabe der Bobine (10) auf einen Arbeitszapfen (33) selbsttätig und exakt positionierbar ist.

5. Vorrichtung nach einem der voranstehenden Ansprüche, dadurch gekennzeichnet, daß das Tastorgan (82) als Sender oder Empfänger ausgebildet ist und mit einem korrespondierenden Empfänger oder Sender an einem die Bobine (10) aufnehmenden Arbeitszapfen (33) zur Positionierung des Tragzapfens (41) zusammenwirkt.

6. Vorrichtung nach einem der voran stehenden Ansprüche, dadurch gekennzeichnet, daß der Bobinenhalter (37) mit dem Tragzapfen (41) an längenveränderlichen und mit dem Bobinenförderer (35) verbundenen Stellorganen gehalten ist und daß die Tastorgane (82) die Stellorgane zum selbsttätigen Ausrichten des Tragzapfens (41) steuern.

7. Vorrichtung nach Anspruch 6, dadurch gekennzeichnet, daß der Bobinenhalter (37) mit den Stellorganen an dem insbesondere oberhalb der Verarbeitungsmaschinen verfahrbaren Bobinenförderer (35) hängend gehalten und der Tragzapfen (41) vertikal abwärts gerichtet ist.

8. Vorrichtung nach Anspruch 6 oder 7, dadurch gekennzeichnet, daß die Stellorgane drei gesondert und unabhängig voneinander betätigbare Druckmittelzylinder (47, 48, 49) sind.

9. Vorrichtung nach einem der voranstehenden Ansprüche, dadurch gekennzeichnet, daß der Tragzapfen (41) Halteorgane oder Spannorgane (78) zur Sicherung der Bobine (10) auf dem Tragzapfen (41) aufweist.

10. Vorrichtung nach einem der voranstehenden Ansprüche, dadurch gekennzeichnet, daß der Tragzapfen (41) am freien Ende ein verstellbares Halteorgan zum Sichern der sich auf den Tragzapfen (41) befindenden Bobine aufweist insbesondere queraxial bzw. radial bewegbare Sicherungsstifte (84), wobei der Tragzapfen (41) in Axialrichtung eine größere Länge aufweist, als die Axialabmessung der Bobine (10) und im Bereich eines so gebildeten Endstücks (83) des Tragzapfens das Halteorgan angeordnet ist.

11. Vorrichtung nach einem der voranstehenden Ansprüche, dadurch gekennzeichnet, daß das freie Ende des Tragzapfens (41) einen Zentrierkegel (79) aufweist, der bei Übergabe der Bobinen (10) an einen Arbeitszapfen (33) in eine kegelstumpfförmige Vertiefung (80) am freien Ende des Arbeitszapfens (33) eintritt und daß das Tastorgan (82) im Bereich des Zentrierkegels (79) angeordnet ist.

12. Vorrichtung nach einem der voranstehenden Ansprüche, dadurch gekennzeichnet, daß die Bobine (10) eine Hülse (62) aufweist, die nach Leerfahren der Bobine (10) vom Arbeitszapfen abstreifbar und einem zu diesem benachbarten Hülsenhalter (85) zuführbar sowie von diesem zum Abtransport bereitgehalten ist, wobei der Hülsenhalter (85), insbesondere ein Hohlkörper, zwischen einer dem Arbeitszapfen benachbarten Aufnahmeposition und einer Bereitstellungsposition bewegbar, insbesondere schwenkbar ist.

13. Vorrichtung nach Anspruch 12, dadurch gekennzeichnet, daß die Hülse (63) einer leer gefahrenen Bobine (10) durch den Bobinenförderer (35) bzw. durch dessen Tragzapfen (41) dem Hülsenhalter (85) entnehmbar und abtransportierbar ist.

14. Vorrichtung nach Anspruch 1 oder einem der weiteren Ansprüche, dadurch gekennzeichnet, daß ein die Bobine (10) aufnehmender Arbeitszapfen (33) an einer Verarbeitungs- insbesondere Verpackungsmaschine (14) schwenkbar gelagert ist zwischen einer aufrechten Position, insbesondere zur Aufnahme einer Bobine und einer horizontalen Position, insbesondere als Arbeitsstellung.

15. Vorrichtung nach Anspruch 14, dadurch gekennzeichnet, daß der Arbeitszapfen (33) durch Verschwenken in zwei horizontale Positionen entgegengesetzter Richtung bewegbar ist, von denen eine Position vorzugsweise als Arbeitsstellung und die andere vorzugsweise zum Abstreifen einer Hülse (63) einer leergefahrenen Bobine (10) dient.

16. Vorrichtung nach Anspruch 15, dadurch gekennzeichnet, daß der Arbeitszapfen (33) eine Verlängerung in Gestalt eines Schwenkzapfens (65) aufweist, der in einem Kipplager (66) zwischen aufrechten Tragschenkeln (75, 76) eines Maschinengestells (74) gelagert ist.

17. Vorrichtung nach Anspruch 14, dadurch gekennzeichnet, daß der Arbeitszapfen (33) antreibbar ist über eine Antriebswelle (70), die quer zum Arbeitszapfen (33) bzw. zum Schwenkzapfen (65) gerichtet ist und deren Antrieb über ein Winkelgetriebe auf den Schwenkzapfen (65) übertragbar ist.

18. Vorrichtung nach Anspruch 14 oder einem der weiteren Ansprüche, dadurch gekennzeichnet, daß eine Anlagescheibe (64) des Arbeitszapfens (33) in Axialrichtung relativ zum Arbeitszapfen (33) verschiebbar ist und in aufrechter Stellung des Arbeitszapfens (33) zum freien Ende desselben bewegt ist zur Aufnahme einer von oben zugeführten Bobine (10).
